# EUROPEAN PATENT SPECIFICATION

(11) **EP 1 970 311 B1**
(45) Date of publication and mention of the grant of the patent: **06.01.2016**
(21) Application number: 08004522.2
(22) Date of filing: 12.03.2008
(51) Int. Cl.: B65B 13/32, B29C 65/20, B29C 65/78

(54) **Welding head for strapping machines**
Schweißkopf für Umreifungsmaschinen
Tête de soudure pour machines de cerclage

(30) Priority: 14.03.2007 IT MI20070084 U
(43) Date of publication of application: 17.09.2008
(73) Proprietor: Messersì Packaging S.R.L., 60010 Barbara (AN) (IT)
(72) Inventor: Ubertini, Massimiliano, 60030 Serra de' Conti (AN) (IT)
(74) Representative: Bonatto, Marco

(56) References cited:
- EP-A1- 1 162 145
- EP-A2- 0 095 644
- DE-A1- 2 627 610
- DE-A1- 3 610 631
- US-A- 3 847 071
- US-A- 4 341 056
- US-A- 5 141 591

## Description

The present invention relates to a welding head for strapping machines.

In the prior art so-called hot strapping machines are known, i.e. machines that enable packages of various type to be strapped using a band or strap made of plastics (for example weldable polypropylene) that is tightly wrapped around the package and welded upon itself. In order to perform welding, a welding unit or head comprises a hot blade that softens the two faces facing the two strap branches that close around the pack whilst locking grippers maintain the strap stationary upstream and downstream of the welding zone. After softening, the blade is withdrawn and a further gripper is driven to compress the two faces against one another.

Usually, all the grippers are sprung by coil springs to have a desired closing force of the various grippers. EP-A-0 095 644 discloses a welding head for strapping machines according to the preamble of claim 1, wherein the elastic element is a cup spring. In known machines such springs suffer from cyclical breakages due to the great number of gripper closing and opening cycles and the relatively great compression forces required for the correct operation of the machine. As the springs are inside the unit, a breakage may occur unnoticed and the machine may be operated, before the breakage is detected, even for a long period, producing faulty straps, which will have limited life and/or will have to be remade, with the consequent evident costs and drawbacks. Further, the breakage of the spring can produce unusual wear to the seat in which it is contained, with a consequent need to replace the entire gripper once the fault has been detected with a delay.

Increasing the size of the springs could improve the situation but the limited space available for the springs in the gripper unit does not necessarily easily make this solution easily practicable. The search for more resistant materials for coil springs is continuous, but often the usable materials increase the cost of the springs and prolong the useful life thereof only to a limited extent. The problem of spring breakage has not therefore been resolved satisfactorily.

The general object of the present invention it to overcome the aforesaid drawbacks by providing a welding unit for strapping machines that overcomes the problem of the breakage of the springs and nevertheless maintains high elastic force features on the grippers.

In view of this object it has been decided to make a welding unit for a strapping machine according to claim 1.

In order to make the explanation of the innovative principles of the present invention and the advantages thereof over the prior art clearer, with the help of the attached drawings a possible embodiment thereof applying such principles will be disclosed below. In the drawings:
- figure 1 is a partially sectioned raised front view of a welding unit according to the invention;
- figure 2 is a partially sectioned side view of the unit in figure 1.

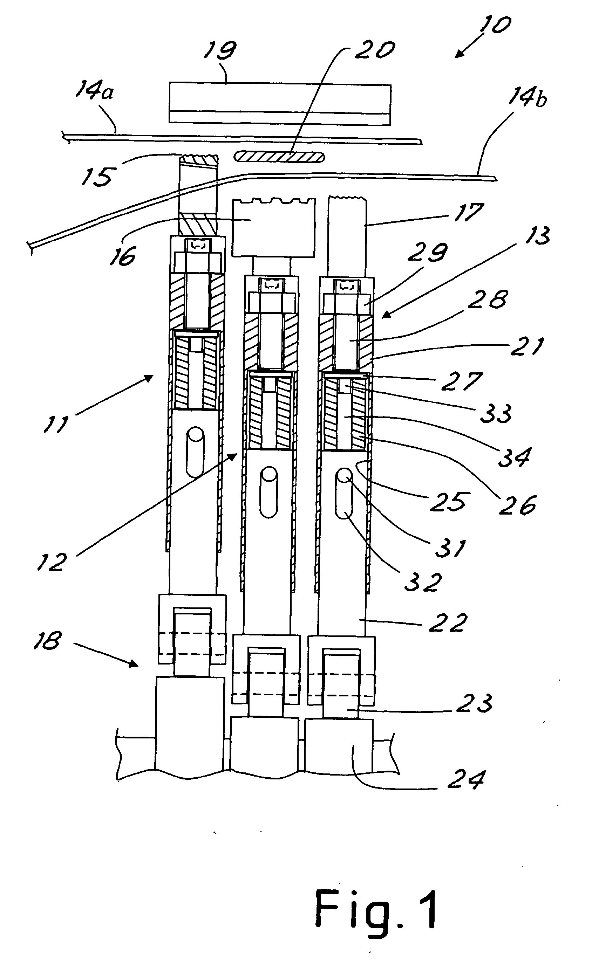

With reference to the figures, in figure 1 there is shown schematically a welding unit, generally indicated by 10, for a strapping machine that is also known and is not therefore further shown or disclosed in detail. In particular, the machine will also comprise all those known devices (such as the launching, recovery and pulling unit) that enable all the operations to be performed that are required for strapping. All these elements are nevertheless easily imaginable by those skilled in the art.

The welding unit comprises three gripper units 11, 12 and 13. The central gripper unit 12 compresses the two branches 14a and 14b of a strap 14 against one another that are to be welded whilst the side gripper units 11 and 13 temporarily stop the sliding of the strap upstream and downstream of the welding zone. In order to act on the strap, each gripper unit has a respective upper gripper 15, 16, 17 of suitable shape. In addition, the gripper units are substantially the same as one another. Driven cam means 18 push each gripper unit upwards, with suitable synchronised timing, to react, with the interposition of the respective strap part, against a suitable upper counter gripper 19.

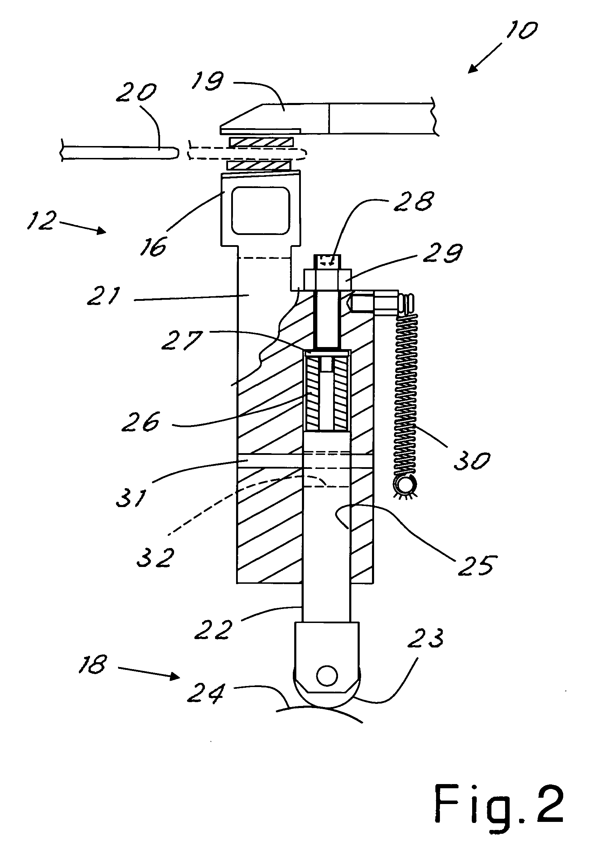

The welding unit 10 also comprises a welding blade 20 that (as can be seen well in figure 2) is movable (by means of a known mechanism that is not shown) between a position inserted between the strap branches (shown by a broken line) and a position outside the strap branches (shown by an unbroken line).

As can be seen well in figure 2, for the central gripper unit 12 each unit has a body 21 that terminates above with the respective gripper and in which there is received, axially slidable in a seat 25, a pivot 22 that protrudes below with a roller or follower 23 that slides on the respective rotating cam 24 of the cam means 18. Suitable side guides (not shown) maintain the gripper unit vertically aligned.

A buffer 26 made of an elastically yieldable material (advantageously rubber or a suitable elastomer) is arranged between the end of the pivot opposite the cam and the bottom of the seat 25 that receives the pivot in the body of the gripper, so that the gripper is elastically supported in an axial direction on the movement pivot 22 thereof.

Advantageously, the buffer carries a metal plate 27 above on which the shank end of a screw 28 acts that is screwed into the body of the gripper and which enables the compression of the buffer to be adjusted at the thrust of the gripper against the counter pivot. On the screw 28 there is a locking nut 29 after the adjustment.

The plate 27 is made like a mushroom to have a foot 33 that engages in an axial seat 34 in the buffer, advantageously extending along the entire length of the buffer to improve the elastic features thereof. The buffer is advantageously cylindrical, just like the seat 25.

In order to improve the return speed of the gripper and to maintain the roller 23 against the cam, a return spring 30 is also advantageously provided.

The stroke of the movement pivot 22 is suitably limited by a stop pin 31 that transversely traverses the pin at an elongated slot 32 thereof.

During operation of the machine, the cams 24 will rotate through the synchronised movement of the grippers according to a known sequence during which the machine will perform the usual operations of pulling the strap, locking the strap in the welding position and of welding.

Each gripper will perform the function with suitable pressure owing to the adjustment of the screw 28 and the elastic features of the buffer 26 of the screw 28.

At this point it is clear how the preset objects have been reached. The design of the gripper unit as disclosed is particularly robust and effective despite the simplicity and cheapness thereof. The use of elastic buffers has enabled the prior-art problems of breakage of the springs to be solved completely. Further, the elastic features provided by the buffers made of elastomeric material are excellent for the specific application and are much preferable to those of traditional coil springs, especially in consideration of the space available.

Naturally, the above description of an embodiment applying the innovative principles of this embodiment is provided merely by way of example of such innovative principles and must not therefore be taken to limit the scope of what is claimed herein. For example, the body of the gripper and the support of the follower can be functionally reversed amongst themselves. Further, the proportions and the exact conformation of the various parts may vary according to specific practical needs.

Naturally, the above description of an embodiment applying the innovative principles of the present invention is given by way of example of such innovative principles and must not therefore be taken to limit the scope of what is claimed herein. The welding of the strap can also be obtained in a different manner from softening by means of a hot blade.

## Claims

1. A welding unit for a strapping machine comprising at least one gripper unit (11, 12, 13) having a body (21) terminating above with a gripper (15, 16, 17) movable towards a corresponding counter gripper (19) for clamping a strap part, the gripper being elastically pushed by movement means (18) along its movement towards the counter gripper, said at least one gripper unit (11, 12, 13) further comprising a thrust pivot (22) protruding below from the body (21) of the gripper unit and on which the movement means (18) acts, **characterised in that** the thrust pivot (22) is received axially slidably in a seat (25) in the body (21) and a buffer (26) made of an elastically yieldable material is arranged between the end of the thrust pivot (22) inside the seat (25) and the bottom of the seat (25).

2. Unit according to claim 1, **characterised in that** the buffer (26) is made of rubber or of another suitable elastomer.

3. Unit according to claim 1, **characterised in that** between the buffer (26) and the bottom of the seat (25) there is a plate (27) on which an end of a screw (28) rests axially to adjust externally the compression of the buffer (26) at the closure of the gripper against the counter gripper.

4. Unit according to claim 3, **characterised in that** on the screw (28) there is a locking nut (29) for locking the adjusting rotation thereof.

5. Unit according to claim 3, **characterised in that** the plate (27) has the shape of a mushroom with a clutch foot (33) in a seat (34) in the corresponding end of the buffer (26).

6. Unit according to claim 1, **characterised in that** the buffer (26) is perforated axially.

7. Unit according to claim 1, **characterised in that** the axial movement of the thrust pivot (22) in the seat (25) thereof is limited by a pin (31) that traverses the thrust pivot at an elongated slot (32).

8. Unit according to claim 1, **characterised in that** the body (21) of the gripper unit moves towards the closing position against the resistance of a return spring (30).

9. Unit according to claim 1, **characterised in that** the thrust pivot (22) carries a roller (23) rolling on cam driving means for driving the movement of the gripper (15, 16, 17).

10. Unit according to claim 1, **characterised in that** the gripper units (11, 12, 13) are three adjacent units, the central gripper unit (12) providing welding compression of the ends of a strap (14) and the side units (11, 13) stopping the sliding of the strap.

11. Unit according to claim 10, **characterised in that** it comprises a heating blade (20) for softening the strap (14) before compression by the central gripper unit (12).

## Patentansprüche

1. Schweißeinheit für eine Umreifungsmaschine, die mindestens eine Greifereinheit (11, 12, 13) umfasst, die einen Körper (21) aufweist, der oben mit einem Greifer (15, 16, 17) endet, der in Richtung eines entsprechenden Gegengreifers (19) zum Einspannen eines Bandteils beweglich ist, wobei der Greifer von Bewegungsmitteln (18) elastisch entlang seiner Bewegung in Richtung des Gegengreifers gedrückt wird, wobei diese mindestens eine Greifereinheit (11, 12, 13) ferner einen Schub-Drehzapfen (22) umfasst, der unten vom Körper (21) der Greifereinheit vorsteht und auf den die Bewegungsmittel (18) einwirken, **dadurch gekennzeichnet, dass** der Schub-Drehzapfen (22) axial verschiebbar in einem Sitz (25) in dem Körper (21) aufgenommen ist und ein Puffer (26) aus einem elastisch nachgiebigen Material zwischen dem Ende des Schub-Drehzapfens (22) im Sitz (25) und dem Boden des Sitzes (25) angeordnet ist.

2. Einheit nach Anspruch 1, **dadurch gekennzeichnet, dass** der Puffer (26) aus Gummi oder einem anderen geeigneten Elastomer besteht.

3. Einheit nach Anspruch 1, **dadurch gekennzeichnet, dass** sich zwischen dem Puffer (26) und dem Boden des Sitzes (25) eine Platte (27) befindet, auf der ein Ende einer Schraube (28) axial ruht, um extern die Kompression des Puffers (26) beim Schließen des Greifers gegen den Gegengreifer einzustellen.

4. Einheit nach Anspruch 3, **dadurch gekennzeichnet, dass** sich auf der Schraube (28) eine Sicherungsmutter (29) zum Sperren der Einstelldrehung derselben befindet.

5. Einheit nach Anspruch 3, **dadurch gekennzeichnet, dass** die Platte (27) die Form eines Pilzes mit einem Kupplungsfuß (33) in einem Sitz (34) im entsprechenden Ende des Puffers (26) aufweist.

6. Einheit nach Anspruch 1, **dadurch gekennzeichnet, dass** der Puffer (26) axial perforiert ist.

7. Einheit nach Anspruch 1, **dadurch gekennzeichnet, dass** die axiale Bewegung des Schub-Drehzapfens (22) in dem Sitz (25) desselben von einem Stift (31) begrenzt wird, der den Schub-Drehzapfen in einem Längsschlitz (32) durchquert.

8. Einheit nach Anspruch 1, **dadurch gekennzeichnet, dass** sich der Körper (21) der Greifereinheit gegen den Widerstand einer Rückstellfeder (30) in Richtung der Schließstellung bewegt.

9. Einheit nach Anspruch 1, **dadurch gekennzeichnet, dass** der Schub-Drehzapfen (22) eine Rolle (23) trägt, die auf Nockenantriebsmitteln zum Antreiben der Bewegung des Greifers (15, 16, 17) rollt.

10. Einheit nach Anspruch 1, **dadurch gekennzeichnet, dass** die Greifereinheiten (11, 12, 13) drei benachbarte Einheiten sind, wobei die mittlere Greifereinheit (12) eine Schweißpressung der Enden eines Bands (14) bereitstellt und die seitlichen Einheiten (11, 13) das Gleiten des Bands stoppen.

11. Einheit nach Anspruch 10, **dadurch gekennzeichnet, dass** sie ein Heizschwert (20) zum Erweichen des Bands (14) vor der Pressung durch die mittlere Greifereinheit (12) umfasst.

## Revendications

1. Unité de soudure pour une machine de cerclage comprenant au moins une unité de pince (11, 12, 13) ayant un corps (21) se terminant au-dessus par une pince (15, 16, 17) mobile vers une contre-pince correspondante (19) pour serrer une partie de bande de cerclage, la pince étant poussée élastiquement par des moyens de déplacement (18) suivant son mouvement vers la contre-pince, ladite au moins une unité de pince (11, 12, 13) comprenant en outre un pivot de poussée (22) faisant saillie dessous à partir du corps (21) de l'unité de pince et sur lequel agissent les moyens de déplacement (18), **caractérisée en ce que** le pivot de poussée (22) est reçu axialement de manière coulissante dans un siège (25) dans le corps (21) et un tampon (26) réalisé en matériau déformable élastiquement est disposé entre l'extrémité du pivot de poussée (22) à l'intérieur du siège (25) et le fond du siège (25).

2. Unité selon la revendication 1, **caractérisée en ce que** le tampon (26) est réalisé en caoutchouc ou un autre élastomère approprié.

3. Unité selon la revendication 1, **caractérisée en ce qu'**une plaque (27) est disposée entre le tampon (26) et le fond du siège (25), sur laquelle une extrémité d'une vis (28) appuie axialement pour régler extérieurement la compression du tampon (26) à la fermeture de la pince contre la contre-pince.

4. Unité selon la revendication 3, **caractérisée en ce qu'**un écrou de blocage (29) est disposé sur la vis (28) pour bloquer la rotation de réglage de celle-ci.

5. Unité selon la revendication 3, **caractérisée en ce que** la plaque (27) a la forme d'un champignon avec un pied de couplage (33) dans un siège (34) dans l'extrémité correspondante du tampon (26).

6. Unité selon la revendication 1, **caractérisée en ce que** le tampon (26) est perforé axialement.

7. Unité selon la revendication 1, **caractérisée en ce que** le mouvement axial du pivot de poussée (22) dans son siège (25) est limité par une goupille (31) qui traverse le pivot de poussée au niveau d'une fente allongée (32).

8. Unité selon la revendication 1, **caractérisée en ce que** le corps (21) de l'unité de pince se déplace en avant vers la position de fermeture contre la résistance d'un ressort de rappel (30).

9. Unité selon la revendication 1, **caractérisée en ce que** le pivot de poussée (22) porte un rouleau (23) roulant sur des moyens de commande à came pour commander le mouvement de la pince (15, 16, 17).

10. Unité selon la revendication 1, **caractérisée en ce que** les unités de pince (11, 12, 13) sont trois unités adjacentes, l'unité de pince centrale (12) fournissant une compression de soudure des extrémités d'une bande de cerclage (14) et les unités latérales (11, 13) arrêtant le glissement de la bande de cerclage.

11. Unité selon la revendication 10, **caractérisée en ce qu'**elle comprend une lame chauffante (20) pour ramollir la bande de cerclage (14) avant la compression par l'unité de pince centrale (12).
